# EUROPÄISCHE PATENTSCHRIFT

(11) **EP 1 667 907 B1**
(45) Veröffentlichungstag und Bekanntmachung des Hinweises auf die Patenterteilung: **26.12.2007**
(21) Anmeldenummer: 04790086.5
(22) Anmeldetag: 01.10.2004
(51) Int. Cl.: B64F 1/32, B65G 47/57

(54) **SYSTEM ZUM BE- UND ENTLADEN EINES LADERAUMS, INSBESONDERE DES FLUGZEUGS, MIT STÜCKGUT**
SYSTEM FOR LOADING AND UNLOADING UNIT LOADS INTO AND FROM A CARGO HOLD, IN PARTICULAR OF AN AIRCRAFT
SYSTEME POUR CHARGER DES ARTICLES DANS UN COMPARTIMENT DE CHARGEMENT, EN PARTICULIER D'UN AVION, ET POUR LES DECHARGER

(30) Priorität: 02.10.2003 DE 10345998
(43) Veröffentlichungstag der Anmeldung: 14.06.2006
(73) Patentinhaber: Telair International AB, 224 78 Lund (SE)
(72) Erfinder: BENGTSSON, Hans, S-241 31 Eslöv (SE)
(74) Vertreter: Kuhnen & Wacker
(86) Internationale Anmeldenummer: PCT/EP2004/011000
(87) Internationale Veröffentlichungsnummer: WO 2005/032940

(56) Entgegenhaltungen:
- WO-A-03/076267
- US-A- 5 796 052

## Beschreibung

Die vorliegende Erfindung betrifft ein System zum Be- und Entladen eines Laderaums, insbesondere eines Flugzeugs, mit Stückgut, mit einem Fördergerät zum Transport des Stückguts zwischen einer Rollfeldebene oder dergleichen und einer Laderaumöffnung, wobei das Fördergerät ein Transportorgan aufweist, auf dessen Transportseite das Stückgut beim Be- und Entladen aufliegt, sowie einer Zwischenfördereinrichtung, welche im Bereich eines laderaumseitigen Endes des Fördergeräts auf dessen Transportseite aufsitzt und sich in den Laderaum erstreckt, um auf einer Förderseite der Zwischenfördereinrichtung aufliegendes Stückgut zwischen dem Fördergerät und dem Laderaum zu befördern.

Ein derartiges System ist aus der WO 03/076267 A1 der Anmelderin bekannt. Dieses am Beispiel eines Flugzeuges beschriebene System enthält ein äußeres Fördergerät, welches in der Regel eine mobile Umschlagmaschine aufweist. Das Fördergerät enthält ferner herkömmlich ein Förderband oder mehrere aneinander anschließende Förderbänder, die auf der Umschlagmaschine angeordnet sind und als Transportorgan für Stückgut wie Kisten, Koffer, Taschen etc. dienen. Dieses Transportorgan wird im Bereich der Rollfeldebene mit dem Stückgut bestückt, welches dann beim Beladen zu einer Laderaumöffnung des Flugzeugs befördert wird. Die mobile Umschlagmaschine wird hierzu so positioniert, daß das Transportorgan bis in den Bereich der Laderaumöffnung heranreicht, jedoch nicht in diese hineinragt, um Beschädigungen am Flugzeugrumpf zu vermeiden. Zur Anpassung an unterschiedliche Flugzeugtypen ist das Transportorgan zudem wenigstens in seiner Neigung einstellbar.

Bei diesem bekannten Beladesystem ist auf das äußere Fördergerät ferner eine Zwischenfördereinrichtung aufgesetzt, welche in den Laderaum des Flugzeugs hinein reicht. Diese Zwischenfördereinrichtung kann dabei im Flugzeug oder am äußeren Fördergerät befestigt sein. Mittels dieser Zwischenfördereinrichtung kann das Stückgut in den Laderaum befördert und dort zu einer gewünschten Position verbracht werden, damit eine vollautomatische oder wenigstens halbautomatische Förderung, zu der in der Regel nur noch eine einzige Person erforderlich ist, möglich ist. Durch dieses bekannte System lassen sich Flugzeuge in sehr kurzer Zeit be- und entladen. Darüber hinaus ist dieses System jedoch auch bei anderen Anwendungsfällen beispielsweise beim Beladen von Güterwaggons, Containern oder dergleichen anwendbar.

Trotz der vielen Vorteile dieses bekannten Systems insbesondere im Hinblick auf den reduzierten Zeitbedarf für den Be- und Entladevorgang sowie die verringerte Anzahl an erforderlichen Arbeitskräften hat es sich gezeigt, daß es dennoch verbesserungsfähig ist: So kommt es insbesondere bei Stückgut mit scharfen Kanten oder Ecken wie bei Kisten oder Schachteln zuweilen dazu, daß diese an der dem Fördergerät zugewandten Seite der Zwischenfördereinrichtung hängenbleiben und nicht ohne zusätzlichen manuellen Eingriff auf die Förderseite der Zwischenfördereinrichtung gelangen. Die Ursache dieses Problems ist insofern systembedingt, als die Zwischenfördereinrichtung auf die Transportseite des Fördergeräts aufgesetzt ist und, da sie naturgemäß eine gewisse Höhe aufweisen muß, ein entsprechender Höhenunterschied zu überwinden ist. Herkömmliche Schalenkoffer, Reisetaschen etc. sind hierbei mit üblicherweise ausreichend gerundeten Kanten versehen, daß diese "Stufe" problemlos überwunden werden kann. Bei Stückgut mit ausgeprägten Kanten ist dies jedoch nicht immer der Fall. Die Folge hieraus ist zunächst ein Beförderungsstau, wodurch sich die Vorteile im Hinblick auf den reduzierten Zeitbedarf beim Beladen des Laderaums schmälern, und der häufig manuell beseitigt werden muß. Darüber hinaus birgt ein solcher Beförderungsstau zudem die Gefahr, daß einzelne Stückgüter von nachfolgenden Gegenständen seitlich vom Transportorgan geschoben werden können, so daß ein Herabfallen und somit eine Beschädigung derselben möglich ist. Zudem kann dies auch zu einer Gefährdung für in diesem Bereich befindliche Personen führen.

Der Erfindung liegt daher die Aufgabe zugrunde, ein gattungsgemäßes System zum Be- und Entladen eines Laderaums mit Stückgut derart weiterzubilden, daß auch Stückgut mit ausgeprägten Kanten zuverlässig auf die Förderseite der Zwischenfördereinrichtung gelangen kann.

Diese Aufgabe wird durch ein System mit den Merkmalen des Anspruches 1 gelöst. Dieses zeichnet sich insbesondere dadurch aus, daß das Transportorgan in Belade-Förderrichtung vor der aufgesetzten Zwischenfördereinrichtung senkrecht zur Transportebene in Richtung zur Förderseite der Zwischenfördereinrichtung ausgelenkt ist, um das Stückgut auf die Förderseite der Zwischenfördereinrichtung zu leiten.

Es ist somit erfindungsgemäß erstmals vorgesehen, eine Art Übergang zwischen der Transportseite des Fördergeräts und der Förderseite der Zwischenfördereinrichtung herzustellen, damit das Stückgut nicht direkt auf die dem Fördergerät benachbarte Führungsrolle der Zwischenfördereinrichtung stößt, sondern über diese hinweg geleitet wird. Es hat sich in praktischen Versuchen herausgestellt, daß es hierzu lediglich erforderlich ist, das Transportorgan des Fördergeräts aus der an sich durch die Transportseite definierten Transportebene in Richtung zur Förderseite der Zwischenfördereinrichtung auszulenken. Das Stückgut unterliegt somit bereits auf dem Fördergerät einer ersten Richtungsänderung. Es gelangt daher noch zuverlässiger als im Stand der Technik auf die Oberseite der Zwischenfördereinrichtung. Ein Anstoßen des Stückguts an die dem Fördergerät zugewandte Stirnseite der Zwischenfördereinrichtung kann so zuverlässig vermieden werden.

Darüber hinaus unterstützt die erfindungsgemäß vorgesehene lokale Auslenkung des Transportorgans im Bereich vor der Zwischenfördereinrichtung auch den Entladevorgang im System, da aus dem Laderaum herausgeführtes Stückgut keine deutliche Stufe zu überwinden hat, sondern in einer im wesentlichen stetigen Bewegung von der Zwischenfördereinrichtung auf das Fördergerät übertragen wird. Diese stetige Bewegung ergibt sich dabei in der Regel bereits dadurch, daß das Stückgut zumeist eine entsprechende Länge aufweist, die wesentlich größer ist, als der Abstand zwischen dem Punkt der größten Auslenkung des Transportorgans und dem Beginn der Förderseite der Zwischenfördereinrichtung. Dieser Effekt ist auch hilfreich, um ein reibungsloses Beladen mittels dem erfindungsgemäßen System zu ermöglichen. Da die entsprechenden Parameter bekannt sind, läßt sich das erfindungsgemäße System problemlos anpassen.

Daher läßt sich erfindungsgemäß ein Beförderungsstau des Stückguts innerhalb des Be- und Entladesystems zuverlässig vermeiden. Darüber hinaus wird hierdurch auch die Gefahr des Herabfallens von Gepäckstücken oder dergleichen vom Fördergerät deutlich verringert, so daß einerseits Beschädigungen am Stückgut und andererseits Gefährdungen für in diesem Bereich befindliche Personen zuverlässig vermieden werden können. Insbesondere läßt sich erfindungsgemäß ein sehr schneller und zuverlässiger Be- und Entladevorgang erreichen. Dies ist vor allem im Luftverkehr von Bedeutung, da hier die Standzeiten eines Flugzeugs am Flughafen aus Kostengründen möglichst gering gehalten werden sollen.

Vorteilhafte Weiterbildungen des erfindungsgemäßen Systems sind Gegenstand der abhängigen Ansprüche.

So kann das Transportorgan ein Förderband enthalten, dessen jeweils auf der Transportseite vorliegendes Trumm mittels einer Ausstelleinrichtung ausgelenkt ist. In diesem Falle kann ein herkömmliches Förderband genutzt und durch das bloße Anordnen einer entsprechenden Ausstelleinrichtung erfindungsgemäß angepaßt werden. Der konstruktive Aufwand für die Ausstattung eines erfindungsgemäßen Systems oder eine Umrüstung eines herkömmlichen Systems zu einem erfindungsgemäßen Be- und Entladesystem ist somit sehr gering.

Dabei kann die Ausstelleinrichtung ein Bügel sein, welcher das zugeordnete Trumm des Förderbands untergreift. Hiermit läßt sich eine konstruktiv besonders einfach gehaltene, dabei jedoch sehr zuverlässige und stabile Anordnung erzielen. Die Zuverlässigkeit und Funktionalität des erfindungsgemäßen Systems erhöht sich hierdurch weiter.

Von weiterem Vorteil ist es, wenn der Bügel derart in Querrichtung zur Förderrichtung des Förderbands gekrümmt ausgebildet ist, daß ein mittig am Förderband vorliegender Abschnitt des Bügels weiter von der Zwischenfördereinrichtung beabstandet ist, als die seitlichen Abschnitte hiervon. Durch diese Ausgestaltungsweise wird vermieden, daß das Stückgut mit seiner gesamten Breite gleichzeitig auf den überstehenden Bereich trifft. Der Übergang an dieser Stelle läßt sich daher weniger stark ausgeprägt ausgestalten. Ferner reduziert sich hierdurch auch die Reibungsbeanspruchung in diesem Bereich, da das Stückgut allmählich auf den ausgestellten Bereich geführt wird. Somit läßt sich erreichen, daß der Beförderungsfluß insgesamt gleichmäßiger ist. Zudem unterstützt die gekrümmte Ausgestaltung des Bügels die Führung bzw. Ausrichtung des Stückguts auf die nachfolgende Zwischenfördereinrichtung.

In einer alternativen Ausgestaltungsweise kann die Ausstelleinrichtung eine Laufrolle sein, welche das zugeordnete Trumm des Förderbands untergreift. Eine solche Laufrolle hat gegenüber einem Bügel den Vorteil, daß die Reibung gegenüber dem Förderband reduziert ist, so daß dieses mit einem geringeren Energieaufwand antreibbar und zudem weniger belastet im Hinblick auf mögliche Beschädigungen ist.

Von weiterem Vorteil ist es, wenn die Zwischenfördereinrichtung mittels einer Rolleneinrichtung auf dem Transportorgan aufgesetzt ist. Dann kann auch die in diesem Bereich erfolgende Rückstellung der Auslenkung des Transportorgans rollend erfolgen, so daß Reibungsverluste an dieser Stelle gering gehalten werden können.

Dadurch, daß die Zwischenfördereinrichtung zusammen mit der Ausstelleinrichtung in Förderrichtung verschiebbar auf das Fördergerät aufgesetzt ist, ist zudem eine zuverlässige und problemlose Variation der Eindringtiefe der Zwischenfördereinrichtung in den Laderaum möglich, ohne daß die erfindungsgemäß vorgesehene lokale Auslenkung des Transportorgans im Bereich vor der Zwischenfördereinrichtung verloren geht. Der erfindungsgemäße Effekt der verbesserten Übergabe von Stückgut vom Fördergerät auf die Zwischenfördereinrichtung kann somit auch bei variierenden Beladetiefen zuverlässig und fortwährend bzw. ohne Umrüstaufwand genutzt werden.

Das erfindungsgemäße System wird nachfolgend in Ausführungsbeispielen anhand der Figuren der Zeichnung näher erläutert. Es zeigt:
- Fig. 1: eine schematisierte Seitenansicht des erfindungsgemäßen Be- und Entladesystems am Beispiel eines Flugzeugs;
- Fig. 2: eine ebenfalls in Seitenansicht vorliegende Detaildarstellung des Übergangsbereichs zwischen dem Fördergerät und der Zwischenfördereinrichtung;
- Fig. 3: eine Draufsicht auf das Detail gemäß Fig. 2 mit einem Bügel als Ausstelleinrichtung gemäß einer ersten Ausführungsform; und
- Fig. 4: eine Ansicht ähnlich Fig. 3 mit einem Bügel in einer zweiten Ausführungsform.

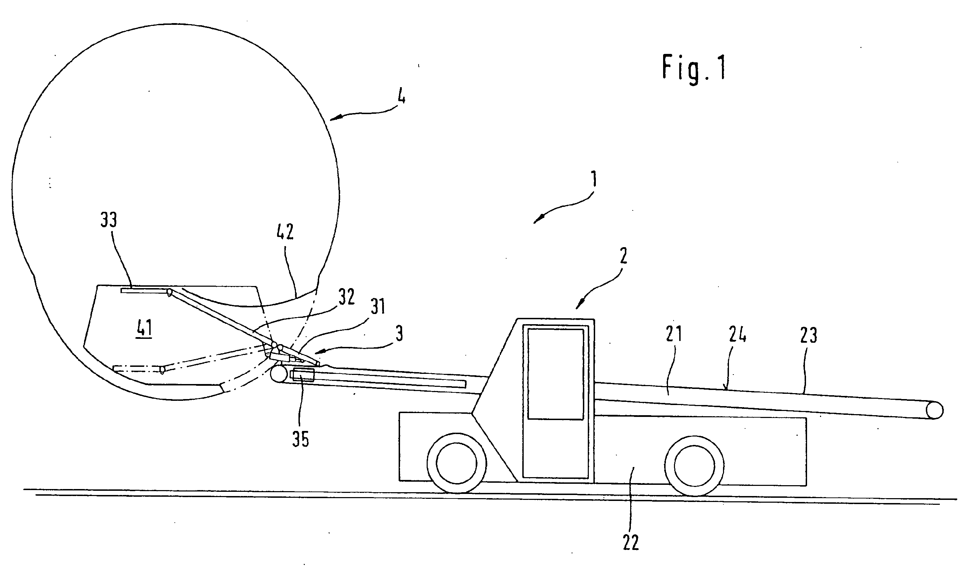

Gemäß der Darstellung in Fig. 1 weist ein System 1 zum Be- und Entladen eines Laderaums ein Fördergerät 2 sowie eine Zwischenfördereinrichtung 3 auf, mittels denen hier nicht dargestelltes Stückgut in ein Flugzeug 4 geladen oder aus diesem Entladen werden kann.

Das Fördergerät 2 enthält hierzu ein Transportorgan 21, welches auf einer mobilen Umschlagmaschine 22 angeordnet ist. Das Transportorgan 21 weist ein über endseitige Rollen umgelenktes Förderband 23 auf, dessen jeweils nach oben gerichtete Seite als Transportseite 24 für das Stückgut dient.

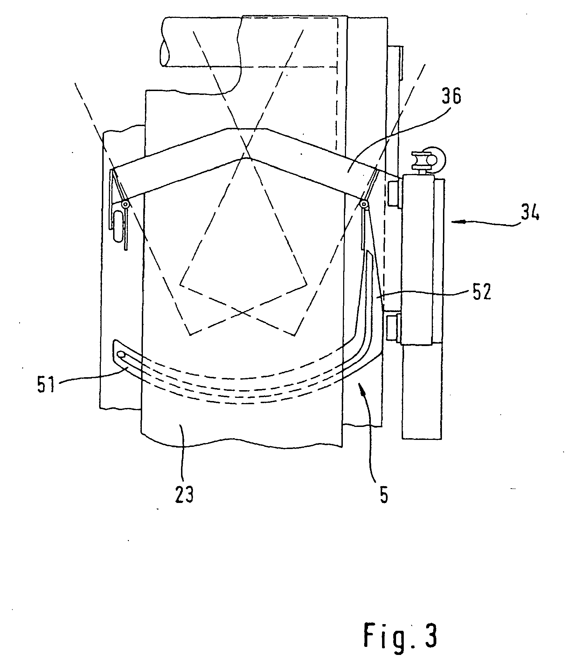

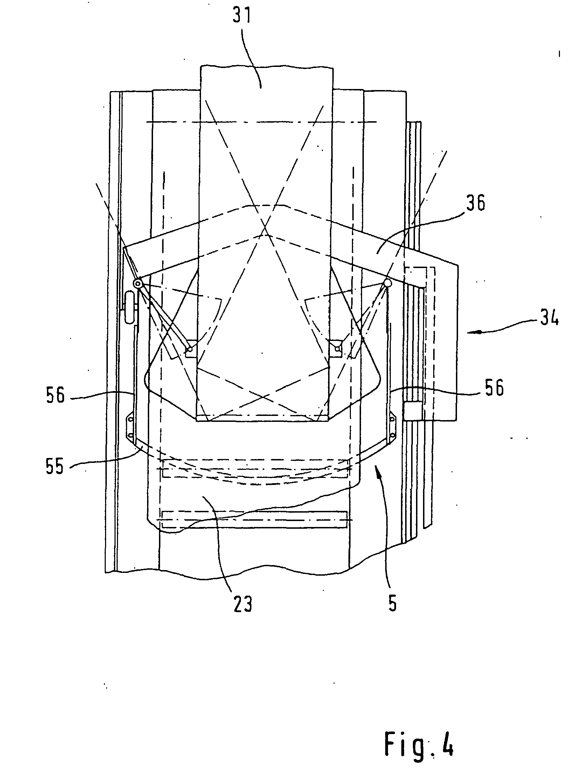

Die Zwischenfördereinrichtung 3 enthält ein erstes Fördermodul 31, ein zweites Fördermodul 32 und ein drittes Fördermodul 33, welche derart gelenkig aneinander gekoppelt sind, daß sie Stückgut in einer frei wählbaren Höhe in einen Laderaum 41 des Flugzeugs 4 einbringen oder hieraus entnehmen können. In Fig. 1 ist die Zwischenfördereinrichtung 3 in ihrer oberen Stellung gezeigt, wobei in strichpunktierten Linien auch eine untere Stellung der Fördermodule 32 und 33 angedeutet ist. Die Fördermodule 31 bis 33 sind mittels einer in den Fig. 3 und 4 näher dargestellten Halterung 34 an das Fördergerät 2 angekoppelt.

Die Verbindung zwischen dem Fördergerät 2 und der Zwischenfördereinrichtung 3 ist dabei derart gestaltet, daß die Zwischenfördereinrichtung 3 mittels beidseitig angeordneten Schlitten 35 linear verschiebbar an den beiden Seitenflächen des Fördergeräts 2 angekoppelt ist. Auf diese Weise kann die Zwischenfördereinrichtung 3 durch eine geöffnete Laderaumluke 42 weiter in den Laderaum 41 hinein oder aus diesem heraus bewegt werden.

In Fig. 3 ist ferner ein Haltearm 36 dargestellt, mittels dem die Zwischenfördereinrichtung 3 am Fördergerät 2 festgelegt ist. Der Haltearm 36 wirkt hierzu mit den beidseitig vorliegenden Schlitten 35 zusammen. Ferner ist in Fig. 3 noch strichliert angedeutet, daß das erste Fördermodul 31 und damit die gesamte Zwischenfördereinrichtung 3 verschwenkbar am Fördergerät 2 gehalten ist. Daher können auch der Laderaumluke 42 benachbarte Bereiche des Laderaums 41 gezielt mit Stückgut beliefert werden.

Im übrigen entspricht der Aufbau des Systems 1 insoweit der aus der WO 03/076267 A1 bekannten Bauweise, so daß hinsichtlich weiterer konstruktiver Details, der Funktionen sowie der damit erzielbaren Effekte hierauf verwiesen wird.

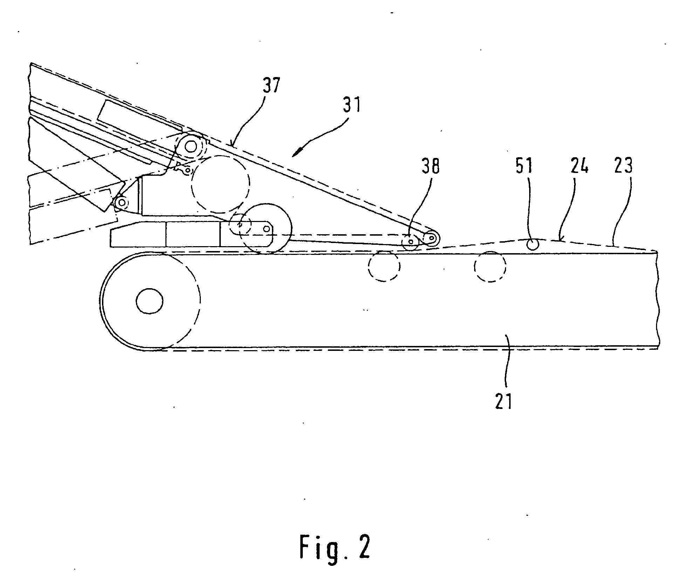

Wie im näheren Detail aus den Fig. 2 und 3 erkennbar ist, enthält das System 1 zudem eine Ausstelleinrichtung 5, mittels der eine lokale Auslenkung des jeweils auf der Transportseite 24 vorliegenden Trumms des Förderbands 23 in dem in Belade-Förderrichtung vor der Zwischenfördereinrichtung 3 vorliegenden Bereich hergestellt wird. Die Ausstelleinrichtung 5 weist hierzu einen Bügel 51 1 auf, der mittels einem Halter 52 zusammen mit der Zwischenfördereinrichtung 3 linear verschiebbar am Fördergerät 2 angekoppelt ist. Der Bügel 51 ist hierbei in der dargestellten Weise in Querrichtung zum Förderband 23 gesehen gekrümmt ausgebildet, so daß ein mittig am Förderband 23 vorliegender Abschnitt des Bügels 51 weiter vom ersten Fördermodul 31 der Zwischenfördereinrichtung 3 beabstandet ist, als die seitlichen Abschnitte hiervon.

Wie insbesondere in Fig. 2 deutlich erkennbar ist, bewirkt der Bügel 51 eine Anhebung des auf der Transportseite 26 vorliegenden Trumms des Förderbands 23, so daß hier ankommendes Stückgut nicht direkt auf das vordere Ende des ersten Fördermoduls 31 trifft, sondern auf eine Förderseite 37 hiervon geleitet wird. Diese Auslenkung wird einerseits durch Schwerkrafteinwirkung auf des Förderband 23 und andererseits mittels einer an der Unterseite des ersten Fördermoduls 31 angeordneten Rolleneinrichtung 38, welche zudem benachbart zum vorderen Ende des Fördermoduls 31 vorliegt, wieder zurückgestellt. Die Zwischenfördereinrichtung 3 stützt sich mittels dieser Rolleneinrichtung 38 rollend und somit reibungsarm auf dem Fördergerät 2 ab.

Der Abstand zwischen dem vorderen Ende des Fördermoduls 31 und dem Bügel 51 wird dabei in der Praxis in Abhängigkeit vom jeweiligen Anwendungsfall gewählt. Hierbei hat es sich als zweckmäßig erwiesen, dicsen Abstand nicht zu gering zu machen, um das Material des Förderbands 23 nicht zu sehr durch die hierbei auftretenden Biegebeanspruchungen zu belasten, und andererseits den Abstand jedoch so gering zu wählen, daß auch Stückgut mit geringeren als den üblichen Abmessungen, beispielsweise kleine Koffer, noch im Verhältnis zu diesem Abstand eine ausreichend große Längserstreckung aufweisen, daß diese zuverlässig durch die vorliegende lokale Auslenkung auf die Förderseite 37 des ersten Fördermoduls 31 geleitet werden und nicht an der vorderen Kante hiervon hängenbleiben.

In Fig. 4 ist eine abgewandelte Ausführungsform dargestellt, in der ein Bügel 55 beidseitig mittels einem jeweiligen Halter 56 an die Zwischenfördereinrichtung 3 angekoppelt ist.

Die in Fig. 3 gezeigte Ausgestaltungsweise eignet sich hierbei insbesondere zur Nachrüstung an herkömmlichen Fördergeräten 2, da hier die erforderlichen konstruktiven Änderungen in Grenzen gehalten werden können und die Zwischenfördereinrichtung 3 im wesentlichen mit geringem Aufwand seitlich auf das Fördergerät 2 aufgesteckt werden kann. Die in Fig. 4 gezeigte Alternative ist dagegen in erster Linie für Neuanfertigungen von Vorteil, da hier der Bügel 55 durch die beidseitige Halterung noch stabiler positionierbar ist und sich somit auch bei schweren Koffern etc. eine besonders zuverlässige Beförderung des Stückguts erzielen läßt.

Die Erfindung läßt neben den hier aufgezeigten Ausführungsformen weitere Gestaltungsansätze zu.

So kann der Bügel der Ausstelleinrichtung 5 auch in einer nicht gekrümmten Gestalt, d. h. gerade ausgebildet sein. Ferner kann der Bügel sowohl im Hinblick auf den Abstand zum vorderen Ende des ersten Fördermoduls 31 als auch zum Ausmaß der Auslenkung jeweils unabhängig einstellbar gehalten sein. Bevorzugt ist der Bügel aus einem Material mit guten Gleiteigenschaften ausgebildet. Er kann jedoch auch Rollen tragen, wodurch die Reibung an dieser Stelle verringerbar ist.

Darüber hinaus kann anstelle des Bügels auch eine Rolleneinrichtung vorgesehen sein, welche eventuell auch mehrere Rollen, die zur Herstellung einer Krümmung zueinander versetzt sind, enthalten kann.

Die Zwischenfördereinrichtung 3 ist im vorliegenden Ausführungsbeispiel mittels der Halterung 34, dem Haltearm 36 und den seitlichen Schlitten 35 am Fördergerät 2 angekoppelt; es ist in einer abgewandelten Ausführungsform jedoch auch möglich, daß die Zwischenfördereinrichtung im Laderaum des Flugzeugs etc. befestigt ist.

Die Rolleneinrichtung 38 kann als in Querrichtung zum Förderband 23 durchgehende Rolle oder auch in Gestalt mehrerer zusammenwirkender Einzelrollen aufgebaut sein. In einer alternativen Ausgestaltungsweise ist es jedoch auch möglich, ein Gleitstück oder dergleichen anstelle der Rolleneinrichtung 38 zu setzen.

Darüber hinaus ist es auch möglich, anstelle des Förderbands 23 eine Art Rollenkette vorzusehen, bei der eine Vielzahl von in Förderrichtung hintereinander angeordneten Rollen vorliegt. In diesem Falle kann die Auslenkung aus der Transportebene auch dadurch erfolgen, daß eine oder mehrere Rollen um ein vorbestimmtes Maß gegenüber den anderen Rollen überstehen.

Sofern das Maß der Auslenkung des Förderbands es erfordert, kann an diesem Förderband 23 zudem auch eine Einrichtung zur Längenkompensation vorgesehen sein, um eine Überdehnung des Materials des Förderbands mit der Gefahr einer Beschädigung desselben zu vermeiden.

Darüber hinaus ist festzustellen, daß das erfindungsgemäße System 1 auch an jeder anderen Art eines Laderaums anwendbar ist, d. h. nicht nur bei Flugzeugen, sondern beispielsweise auch bei Containern oder Waggons eingesetzt werden kann. Darüber hinaus stellt die Zwischenfördereinrichtung 3 mit der angekoppelten Ausstelleinrichtung 5 ein selbständig handelbares Produkt dar, welches auch an herkömmlichen Fördergeräten 2 nachgerüstet werden kann.

## Patentansprüche

1. System (1) zum Be- und Entladen eines Laderaums (41), insbesondere eines Flugzeugs (4), mit Stückgut, mit
einem Fördergerät (2) zum Transport des Stückguts zwischen einer Rollfeldebene o. dgl. und einer Laderaumöffnung, wobei das Fördergerät (2) ein Transportorgan (21) aufweist, auf dessen Transportseite (24) das Stückgut beim Be- und Entladen aufliegt, sowie
einer Zwischenfördereinrichtung (3), welche im Bereich eines laderaumseitigen Endes des Fördergeräts (2) auf dessen TransportseitE aufsitzt zur Erstreckung in den Laderaum (41)? um auf einer Förderseite (37) der Zwischenfördereinrichtung (3) aufliegendes Stückgut zwischen dem Fördergerät (2) und dem Laderaum (41) zu befördern,
**dadurch gekennzeichnet,**
**daß** das Transportorgan (21) in Belade-Förderrichtung vor der aufgesetzten Zwischenfördereinrichtung (3) senkrecht zur Transportebene in Richtung zur Förderseite (37) der Zwischenfördereinrichtung (3) ausgelenkt ist, um das Stückgut auf die Förderseite (37) der Zwischenfördereinrichtung (3) zu leiten.

2. System nach Anspruch 1, **dadurch gekennzeichnet, daß** das Transportorgan (21) ein Förderband (23) enthält, dessen jeweils auf der Transportseite (24) vorliegendes Trumm mittels einer Ausstelleinrichtung (5) ausgelenkt ist.

3. System nach Anspruch 2, **dadurch gekennzeichnet, daß** die Ausstelleinrichtung (5) ein Bügel (51; 55) ist, welcher das zugeordnete Trumm des Förderbands (23) untergreift.

4. System nach Anspruch 3, **dadurch gekennzeichnet, daß** der Bügel (51; 55) derart in Querrichtung zur Förderrichtung des Förderbands (23) gekrümmt ausgebildet ist, daß ein mittig am Förderband (23) vorliegender Abschnitt des Bügels (51; 55) weiter von der Zwischenfördereinrichtung (3) beabstandet ist, als die seitlichen Abschnitte hiervon.

5. System nach Anspruch 2, **dadurch gekennzeichnet, daß** die Ausstelleinrichtung eine Laufrolle ist, welche das zugeordnete Trumm des Förderbands (23) untergreift.

6. System nach einem der Ansprüche 1 bis 5, **dadurch gekennzeichnet, daß** die Zwischenfördereinrichtung (3) mittels einer Rolleneinrichtung (38) auf dem Transportorgan (21) aufgesetzt ist.

7. System nach einem der Ansprüche 2 bis 6, **dadurch gekennzeichnet, daß** die Zwischenfördereinrichtung (3) zusammen mit der Ausstelleinrichtung (5) in Förderrichtung verschiebbar auf das Fördergerät (2) aufgesetzt ist.

## Claims

1. A system (1) for loading and unloading loose cargo in a cargo hold (41), preferably of a plane (4), comprising
a conveyor apparatus (2) for transporting the loose cargo between a tarmac level or the like and a cargo hold opening, wherein the conveyor apparatus (2) comprises a transport organ (21) on whose transport side (24) the loose cargo lies during loading and unloading, as well as
an intermediate conveyor means (3) which rests on the transport side of the conveyor apparatus (2) in the range of a cargo hold-side end thereof and extends into the cargo hold (41) for conveying loose cargo lying on a conveying side (37) of the intermediate conveyor means (3) between the conveyor apparatus (2) and the cargo hold (41),
**characterized in that**
the transport organ (21) is deflected, in front of the placed-on intermediate conveyor means (3) when viewed in the direction of loading-conveying, perpendicular to the plane of transport in a direction towards the conveying side (37) of the intermediate conveyor means (3), so as to guide the loose cargo onto the conveying side (37) of the intermediate conveyor means (3).

2. The system in accordance with claim 1, **characterized in that** the transport organ (21) includes a conveyor belt (23) whose respective section present on the transport side (24) is deflected with the aid of a raising means (5).

3. The system in accordance with claim 2, **characterized in that** the raising means (5) is a bow (51; 55) which extends underneath the associated section of the conveyor belt (23).

4. The system in accordance with claim 3, **characterized in that** the bow (51; 55) is realized to have a curvature in the transverse direction relative to the conveying direction of the conveyor belt (23), such that a portion of the bow (51; 55) present in a center position at the conveyor belt (23) is spaced farther apart from the intermediate conveyor means (3) than the lateral portions thereof.

5. The system in accordance with claim 2, **characterized in that** the raising means is a roller which extends underneath the associated section of the conveyor belt (23).

6. The system in accordance with any one of claims 1 to 5, **characterized in that** the intermediate conveyor means (3) is placed on the transport organ (21) with the aid of a roller means (38).

7. The system in accordance with any one of claims 2 to 6, **characterized in that** the intermediate conveyor means (3) is placed on the conveyor apparatus (2) so as to be displaceable in the conveying direction together with the raising means (5).

## Revendications

1. Système (1) destiné au chargement et au déchargement d'un compartiment de chargement (41), en particulier d'un avion (4), avec des marchandises en colis,
comportant un engin de manutention (2) en vue du transport des marchandises en colis entre un plan d'atterrissage ou semblable et une ouverture de compartiment de chargement, dans lequel l'engin de manutention (2) présente un organe de transport (21), sur le côté transport (24) duquel sont posées les marchandises en colis lors du chargement et du déchargement, ainsi que
comportant un dispositif de manutention intermédiaire (3), lequel repose dans la zone d'une extrémité du côté du compartiment de chargement de l'engin de manutention (2) sur son côté de transport en vue de l'extension dans le compartiment de chargement (41) afin d'acheminer des marchandises en colis posées sur un côté manutention (37) du dispositif de manutention intermédiaire (3) entre l'engin de manutention (2) et le compartiment de chargement(41),
**caractérisé en ce**
**que** l'organe de transport (21) est dévié dans le sens de manutention de chargement avant le dispositif de manutention intermédiaire (3) affecté perpendiculairement au plan de transport en direction du côté manutention (37) du dispositif de manutention intermédiaire (3) afin de guider les marchandises en colis sur le côté manutention (37) du dispositif de manutention intermédiaire (3).

2. Système selon la revendication 1, **caractérisé en ce que** l'organe de transport (21) comporte un convoyeur à bande (23), dont le brin respectivement présent sur le côté transport (24) est dévié au moyen d'un dispositif déflecteur (5).

3. Système selon la revendication 2, **caractérisé en ce que** le dispositif déflecteur (5) est une traverse (51 ; 55), laquelle vient en prise par en dessous du brin associé du convoyeur à bande (23).

4. Système selon la revendication 3, **caractérisé en ce que** la traverse (51 ; 55) est conçue courbée de telle façon dans le sens de la largeur par rapport au sens de manutention du convoyeur à bande (23) qu'une section de la traverse (51 ; 55) présente au centre sur le convoyeur à bande (23) est encore écartée du dispositif de manutention intermédiaire (3), en sa qualité de section latérale à cela.

5. Système selon la revendication 2, **caractérisé en ce que** le dispositif déflecteur est un galet de roulement, lequel vient en prise par en dessous du brin associé du convoyeur à bande (23).

6. Système selon l'une quelconque des revendications 1 à 5, **caractérisé en ce que** le dispositif de manutention intermédiaire (3) est posé au moyen d'un système à rouleaux (38) sur l'organe de transport (21).

7. Système selon l'une quelconque des revendications 2 à 6, **caractérisé en ce que** le dispositif de manutention intermédiaire (3) est posé conjointement avec le dispositif déflecteur (5) dans le sens de manutention de manière coulissante sur l'engin de manutention (2).
